**Europäisches Patentamt**

**European Patent Office**

**Office européen des brevets**

(19)

(11) Veröffentlichungsnummer: **0 175 902**
**B1**

(12)   # EUROPÄISCHE PATENTSCHRIFT

(45) Veröffentlichungstag der Patentschrift:
**11.05.88**

(51) Int. Cl.⁴: **B 23 B 29/04**

(21) Anmeldenummer: **85110138.6**

(22) Anmeldetag: **13.08.85**

(54)   **Werkstück- oder Werkzeughalteranordnung für die spanabhebende Bearbeitung.**

(30) Priorität: **25.09.84 DE 3435119**

(43) Veröffentlichungstag der Anmeldung:
**02.04.86 Patentblatt 86/14**

(45) Bekanntmachung des Hinweises auf die Patenterteilung:
**11.05.88 Patentblatt 88/19**

(84) Benannte Vertragsstaaten:
**CH DE FR GB IT LI SE**

(56) Entgegenhaltungen:
**EP - A - 0 010 074**
**DE - A - 1 956 662**
**DE - A - 3 007 440**
**DE - A - 3 228 521**

(73) Patentinhaber: **Gildemeister-DeVlieg System Werkzeuge GmbH, Morsestrasse 1, D-4800 Bielefeld1 (DE)**

(72) Erfinder: **Schürfeld, Horst, Am Alten Dreisch 63, D-4800 Bielefeld 1 (DE)**

(74) Vertreter: **Loesenbeck, Karl-Otto, Dipl.-Ing. et al, Jöllenbecker Strasse 164, D-4800 Bielefeld 1 (DE)**

## Beschreibung

Die vorliegende Erfindung betrifft eine Werkstück- oder Werkzeughalteranordnung für die spanabhebende Bearbeitung, bestehend aus einem Grundhalter sowie einem Wechselhalter, die jeweils profilierte Anlageflächen haben, mit denen sie mittels eines zugeordneten Spannmechanismusses formschlüssig und selbstzentrierend miteinander verbindbar sind.

Im Hinblick darauf, dass moderne Werkzeugmaschinen auf die Durchführung sehr unterschiedlicher Zerspanungsaufgaben, wie z.B. Bohren, Fräsen, und Drehen, ausgelegt sind, ergeben sich auch an die Halteanordnungen für Werkzeuge und Werkstücke durch diese verschiedenen Bearbeitungsaufgaben und andererseits unter Berücksichtigung eines automatischen Bearbeitungsablaufes mit entsprechendem Werkzeug- oder Werkstückwechsel, vielfältige Anforderungen.

Neben einer grossen Flexibilität zur Anpassung an die jeweiligen Bearbeitungsaufgaben und Maschinenkonzepte muss eine hohe Stabilität sowohl im statischen wie im dynamischen Verhalten auch unter Berücksichtigung der verschiedenen Zerspanungsaufgaben mit durchaus unterschiedlichen Belastungen gegeben sein. Es muss eine hohe Wechsel- und Wiederholgenauigkeit vorhanden sein, um insbesondere auch im automatischen Bearbeitungsablauf enge Fertigungstoleranzen einhalten zu können. Es muss eine einfache Handhabungsmöglichkeit sowohl für den manuellen wie für den automatischen Wechsel gegeben sein und trotz aller Komplexität der Anforderungen muss die Halteranordnung kostengünstig und wirtschaftlich herstellbar sein.

Die vorbekannten Halteranordnungen für die spanabhebende Bearbeitung können aufgrund ihrer Ausgestaltung jeweils nur einem Teil dieser Forderungen gerecht werden. Neben Halteranordnungen, die von Haus aus nur auf einen einzigen vorgegebenen Zerspanungsvorgang, beispielsweise die Drehbearbeitung oder die Bohrbearbeitung und die daraus resultierenden Belastungsfälle ausgelegt sind und die auch keine profilierten Anlageflächen zwischen dem Grundhalter und dem Wechselhalter haben, sondern ebenfalls mit ein oder zwei Vorsprüngen entsprechend dem jeweiligen Belastungsfall ineinandergreifen (EP-A-001-0074, DE-A-3007 440, DE-PS 3108 439) ist durch die DE-A-3228 521 auch schon eine Halteranordnung bekannt geworden, bei der die gegenseitigen Anlageflächen des Wechselhalters und des Grundhalters profiliert sind und nach Betätigung des Spannmechanismusses formschlüssig ineinandergreifen. Die dortigen Profilierungen werden durch zusammenwirkende Verzahnungen gebildet, die in Art einer sogenannten Hirth-Verzahnung ausgebildet sind, wobei die Verzahnungen radial zu einem in der Mitte der Auflageflächen befindlichen Zentrum orientiert sind. Dank dieser Ausgestaltung können bereits durchaus unterschiedliche, sich aus verschiedenen Zerspanungsaufnahmen ergebende Kräfte, insbesondere axiale Biegekräfte, radiale Biegekräfte, aber auch Drehmomente im Verbindungsbereich von Wechselhalter und Grundhalter übertragen werden und es findet beim Tätigen des Spannmechanismusses auch eine Selbstzentrierung statt, so dass eine gute Wechsel- und Wiederholgenauigkeit gegeben ist. Durch die Selbstzentrierung kann auch der Spannmechanismus selbst mit relativ weiten Toleranzen im Bereich der zusammenwirkenden Elemente ausgestattet sein, so dass die beim automatischen Wechsel von dem Greifautomat erreichte nur recht grobe Vorhaltegenauigkeit ausreicht, doch ist trotzdem die Anpassbarkeit an die jeweiligen Bearbeitungsaufgaben und Maschinenkonzepte relativ gering und insbesondere sind die Herstellungskosten einer derartigen Verzahnung relativ hoch, wie sich aus dem Erfordernis der Herstellung jeweils Zahn für Zahn, in immer etwas anderer Orientierungslage zum Zentrum hin, ergibt. Der in vielen Bearbeitungsfällen erforderlichen Erweiterung und Ergänzung der Anlageflächen über sozusagen das Grundschema der Anlagefläche hinaus sind dort äusserst enge Grenzen gesetzt. Diese Ergänzungs- und Erweiterungsflächen sollen ja an vorgegebenen Stellen ebenfalls zur sicheren Abstützung des Werkzeuges oder des Werkstückes mit entsprechenden Verzahnungen bzw. Verzahnungsabschnitten versehen werden. Eine sinnvolle Herstellbarkeit der letzteren ist jedoch nur dann kostenmässig zu realisieren, wenn diese weiteren Verzahnungsabschnitte fluchtend zu den Verzahnungen der Grund-Anlagefläche liegen, so dass bei der dortigen Ausgestaltung infolge der Zentrumsorientierung der Verzahnung der Grund-Anlagefläche kaum sinnvolle Ausgestaltungsmöglichkeiten und im Grunde genommen Ergänzungs- und Erweiterungsmöglichkeiten in Anpassung an die verschiedenen Zerspanungsarbeiten fehlen.

Der vorliegenden Erfindung liegt von daher die Aufgabe zugrunde, eine Werkstück- oder Werkzeughalteranordnung der gattungsgemässen Art zu schaffen, die sowohl den verschiedenen Anforderungen bezüglich der verschiedenen Belastungskräfte, wie auch den Anforderungen an die räumlichgeometrische Anpassbarkeit der Halter und ihrer Anlageflächen sowie insbesondere auch einer sehr einfachen wirtschaftlichen Herstellungsweise gerecht wird.

Die erfindungsgemässe Lösung ergibt sich bei einer Halteranordnung der gattungsgemässen Art aus dem kennzeichnenden Teil des Patentanspruches 1. Die kreuzweise Herausarbeitung der Profile ergibt auf den Anlageflächen Abschnitte, denen eine sehr zuverlässig selbst zentrierende Wirkung zukommt, so dass sich insgesamt eine formschlüssige Verbindung in drei verschiedenen Achsrichtungen, mit zuverlässiger Aufnahme sowohl axialer und radialer Biegekräfte wie auch von Drehmomenten, zusammen mit einer sehr hohen Wechsel- und Wiederholgenauigkeit ergibt. Die Verwendung von auf den flankentragenden Profilen gewährleistet dabei, dass es beim Verspannen auf den jeweiligen Profilflanken zu einem sicheren Formschluss kommt, der sowohl im statischen wie im dynamischen Verhalten eine sehr hohe Stabilität gewährleistet und, im Gegensatz zu zwei plan aufeinanderliegenden Flächen, ein sehr hohes Dämpfungsverhalten hat, so dass Schwingungen weitgehend nicht auftreten können. Die gegebene hohe statische Belastbarkeit ist dabei besonders für die Übertragung hoher Drehmomente geeignet.

Besonders hervorzuheben ist die einfache und kostengünstige Herstellbarkeit dieser kreuzweise liegenden Profile. Sie können beispielsweise erst nach der Warmbehandlung des Materials im Vollschliff-Schleifverfahren hergestellt werden, also in einer äusserst wirtschaftlichen Herstellungsweise, die darüberhinaus auch eine hochpräzise Form gewährleistet, und zwar in Verbindung mit hoher Verschleissfestigkeit und geringer Verschmutzungsgefahr, was zu einer langen Nutzungsdauer bei gleichbleibender Wechselgenauigkeit führt.

Hervorzuheben ist ferner die ausserordentliche Flexibilität in Bezug auf die geometrisch-räumliche Anpassung von Wechselhalter und Grundhalter an die verschiedenen Zerspanungsaufgaben. So sind insbesondere für entsprechende Einsatzzwecke Erweiterungen und Vergrösserungen der Grund-Anlageflächen, mit Anbringung entsprechender Profilierungen an der Erweiterungsflächen, problemlos im Grunde genommen in jeder räumlichen Richtung ohne nenneswerte Erhöhung der Herstellungskosten möglich, da sich praktisch in allen Raumerweiterungsrichtungen immer ohne weiteres Anbringungsmöglichkeiten für weitere Profilabschnitte ergeben, die dann fluchtend zu vorhandenen Profilen der Grund-Anlagefläche liegen. Man bekommt damit in den verschiedenen Zerspanungsfällen dann zusätzliche Werkzeug- oder Werkstückabstützungen genau dort, wo sie von den Belastungskräften her erforderlich sind.

Hervorzuheben ist auch die sehr einfache Handhabungsmöglichkeit insbesondere auch im Zusammenhang mit einem automatischen Werkzeugwechsel. Die Selbstzentrierung ermöglicht grobe Toleranzen im Bereich der zusammenwirkenden Elemente des Spannmechanismusses, so dass für ein zuverlässiges, exakt zentrisches Spannen eine nur recht grobe Vorhaltegenauigkeit des Wechselhalters jeweils vor den Grundhalter die Durchführung des Wechsels und die Tätigung der Spannung ausreicht.

Weitere bevorzugte Ausgestaltungen sind in den Unteransprüchen gekennzeichnet. Sie kennzeichnen zweckmässige bauliche und geometrische Ausgestaltungen der Profile und der Erweiterungsflächen, die zu den vorstehend aufgeführten Vorteilen der Ausgestaltung beitragen. Hervorzuheben in diesem Zusammenhang ist auch die Ausgestaltung des Spannmechanismusses, auch im Zusammenwirken und in seiner Anordnung zu den Profilen der Anlageflächen, die in besonderem Masse ein zuverlässiges automatisches, aber ihrem grundsätzlichen Aufbau nach problemlos ein handhabungsgerechtes manuelles Verspannen ermöglicht.

Ausführungsbeispiele derartige Werkstück- oder Werkzeughalteranordnungen werden nachstehend unter Bezugnahme auf die Zeichnung näher beschrieben.

Es zeigen:

Figur 1 eine Teilseitenansicht, teilweise geschnitten, einer Werkzeughalteranordnung gemäss der vorliegenden Erfindung,

Figur 2 eine Draufsicht auf die Anlagefläche des Grundhalters der Anordnung nach Figur 1,

Figur 3 eine Teilseitenansicht, teilweise geschnitten, einer weiteren Werkzeughalteranordnung gemäss der Erfindung,

Figur 4 eine Draufsicht auf die Anlagefläche des Grundhalters der Halteranordnung nach Figur 3,

Figur 5 eine Werkzeughalteranordnung gemäss der Erfindung im Teillängsschnitt mit Darstellung eines Spannmechanismusses für den automatischen Wechsel, in der Offenstellung des Spannmechanismusses,

Figur 6 die Anordnung nach Figur 5 bei getätigter Verspannung von Wechselhalter und Grundhalter,

Figur 7 einen Querschnitt durch die Anordnung gemäss Schnitt VII-VII der Figur 6,

Figur 8 einen Teillängsschnitt durch eine Halteranordnung mit einem Spannmechanismus für die manuelle Verspannung von Wechselhalter und Grundhalter, mit Darstellung der Spannlage,

Figur 9 einen Querschnitt gemäss Schnitt IX-IX durch die Anordnung nach Figur 8,

Figuren 10-12 weitere Ausgestaltungen derartiger Halteranordnungen jeweils in Teilschnittdarstellung.

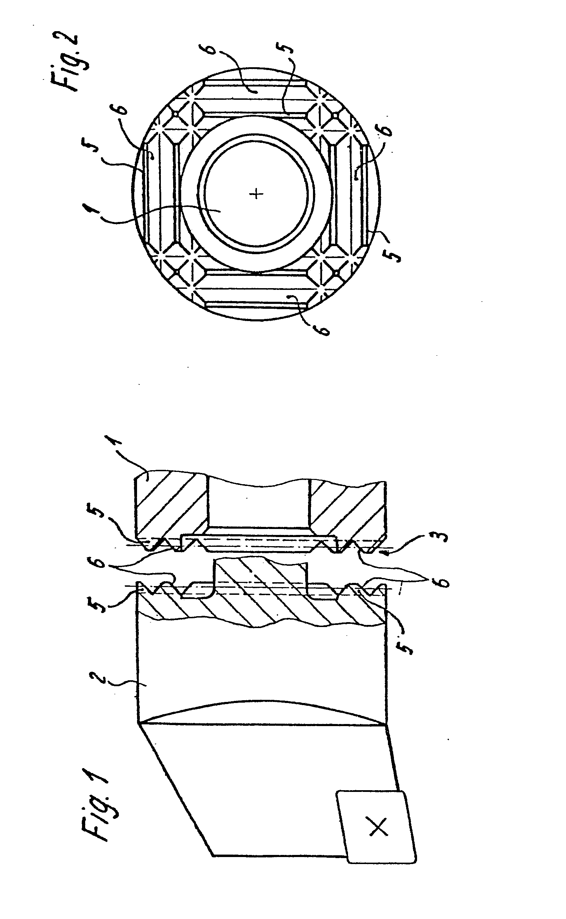

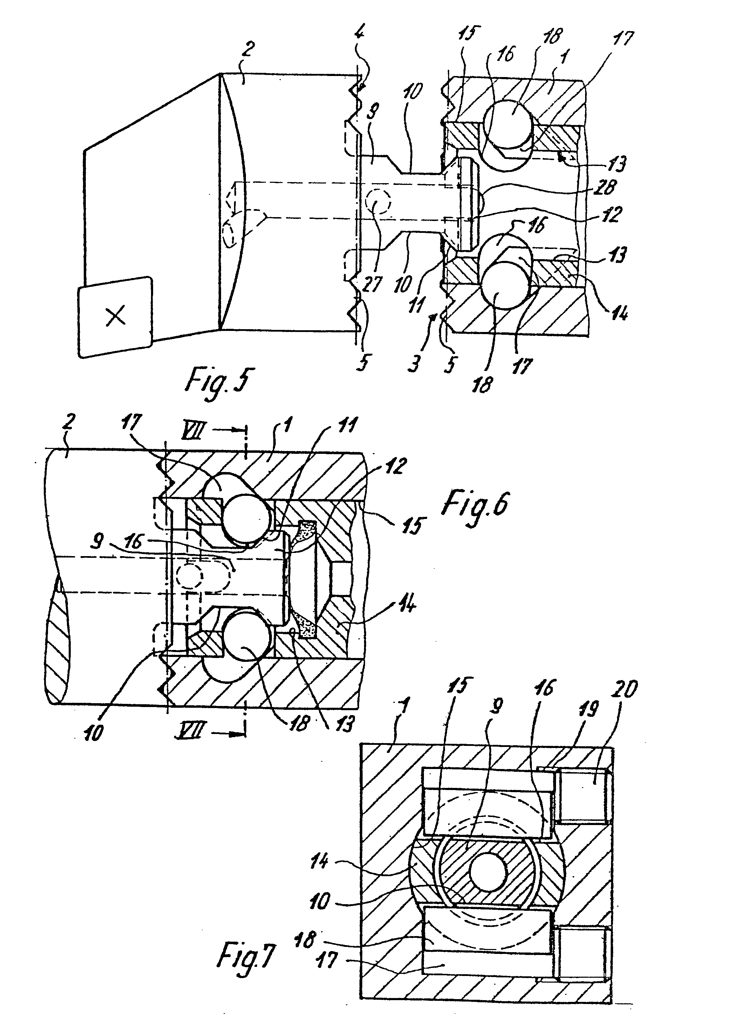

Bei der in den Figuren 1 und 2 gezeigten Werkzeughalteranordnung ist ein Grundhalter 1 vorgesehen, sowie ferner ein Wechselhalter 2, der in diesem Fall ein Werkzeug, beispielsweise eine Drehschneide, trägt. Der Grundhalter 1 und der Wechselhalter 2 haben, jeweils an den einander zugewandten Stirnflächen, Anlageflächen 3 bzw. 4, die jeweils eine Anzahl, von Anlagefläche zu Anlagefläche miteinander zusammenwirkender Profile 5 aufweisen. Im dargestellten Ausführungsbeispiel sind, wie insbesondere aus Figur 4 ersichtlich, die Profile 5 jeweils um Zentren der Anlageflächen 3, 4 herum an vier jeweils winklig, im dargestellten Ausführungsbeispiel in einem Winkel von 90° zueinander liegenden Seiten der Anlageflächen 3 und 4 angeordnet. Die Profile sind jeweils so herausgearbeitet, dass sie gegenseitig an ihren Flanken 6 tragen, wenn die Anlageflächen 3 und 4 miteinander verspannt sind. Im dargestellten Ausführungsbeispiel sind Profile 5 mit prismatischem Querschnitt vorgesehen, und zwar mit einem spitzen Winkel von gleich oder kleiner 90°. Derartige prismatische Profile sind besonders einfach erst nach der Warmbehandlung des Materiales durch das Vollschliff-Schleifverfahren herstellbar.

Werden die Anlageflächen 3 und 4 mit ihren Profilen 5 ineinandergesteckt und gegeneinander verspannt, kommt es an den Flanken 6 der Profile 5 zu einer formschlüssigen, Kraft übertragenden Verbindung. Die kreuzweise Anordnung der Profile 5 auf den Anlageflächen 3 und 4 gewährleistet dabei, dass sich in jedem Fall auf den Anlageflächen eine selbstzentrierende Wirkung erzeugt, die eine hohe Wechsel- und Wiederholgenauigkeit gewährleistet, wobei die getätigte Formschlussverbindung in drei Achsen wirksam ist und somit sowohl axiale wie radiale Biegekräfte wie auch Drehmomente schwingungsfrei übertragen kann.

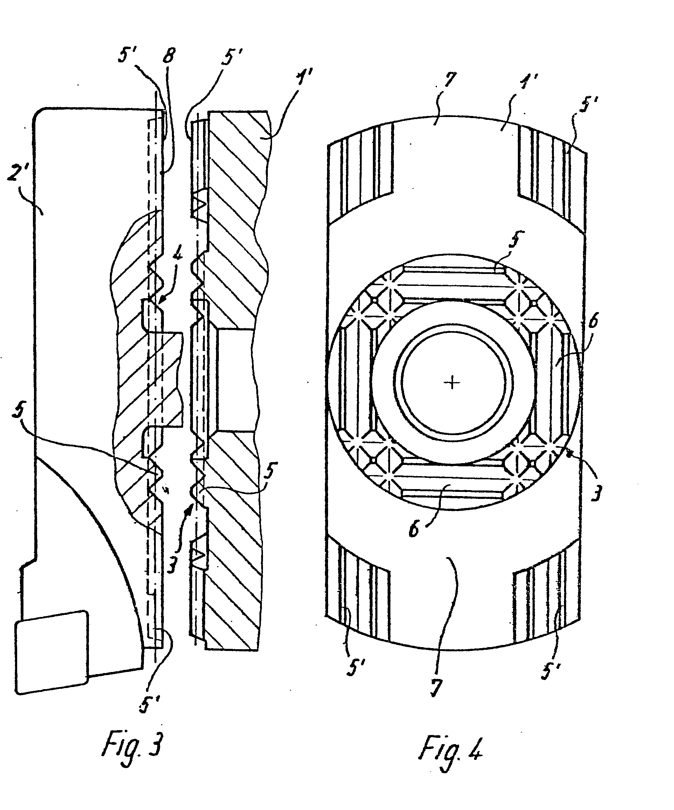

Bei dem in den Figuren 3 und 4 dargestellten Ausführungsbeispiel einer Werkzeughalteranordnung ist illustriert, wie auf denkbar einfache Weise, ausgehend beispielsweise von dem Haltergrundprinzip nach den Figuren 1 und 2, und in flexibler Anpassung an einen anderen Bearbeitungsfall, die Anschlussmöglichkeit von Grundhalter und Wechselhalter unter Beibehaltung einer sehr einfachen Herstellungsmöglichkeit erweitert werden kann. So sind dort ein Grundhalter 1' und ein Wechselhalter 2' gezeigt, die über die Grund-Anlageflächen 3, 4 mit den kreuzweise liegenden Profilen 5 hinaus an zwei einander gegenüberliegenden Seiten Erweiterungsflächen 7, 8 vorgesehen sind, die im dargestellten Ausführungsbeispiel jeweils in den Raumecken weitere Profile bzw. Profilabschnitte 5' tragen, die jeweils fluchtend zu den in der Grund-Anlagefläche 3 bzw. 4 liegenden Profilen 5 angeordnet sind. Im dargestellten Ausführungsbeispiel erhält somit der Wechselhalter 2' in sehr zweckmässiger Weise unmittelbar unter dem hier relativ weit ausserhalb der Haltermitte liegenden Drehschneide eine zuverlässige, wiederum formschlüssige Abstützung.

Die Anschauung der Figuren 3 und 4 zeigt, dass im Grunde genommen nach diesem System die Anlageflächen 3, 4 beliebig nach Form und Grösse variiert werden können und damit den spezifischen Aufgaben angepasst werden können und sich dabei auch immer Anordnungsmöglichkeiten für weitere Profile bzw. Profilabschnitte in Fluchtungslage zu Profilen der Grund-Anlageflächen ergeben.

Bei dem in den Figuren 5, 6 und 7 dargestellten Ausführungsbeispiel ist eine Halteranordnung mit einem Grundhalter 1 und einem Wechselhalter 2 entsprechend dem Ausführungsbeispiel nach den Figuren 1 und 2 im Zusammenhang mit einem Spannmechanismus dargestellt, der speziell auf den automatischen Wechsel ausgelegt ist und der sich in seiner Flexibilität und der Übertragbarkeit der Kräfte an die hohe Flexibilität und das hohe Kraftübertragungsvermögen der Halteranordnung als solcher anpasst. Im dargestellten Ausführungsbeispiel ist an dem Wechselhalter 2 in seinem Zentrum, im Winkel von 90° über seine Anlagefläche 4 mit den Profilen 5 vorstehend, ein Zuganker 9 angeordnet, der im dargestellten Ausführungsbeispiel zwei einander gegenüberliegende Seitenausnehmungen 10 besitzt, an die sich zum freien Ende hin eine vorzugsweise unter 45° schräg liegende Spannfläche 11 an der Rückseite eines Kopfes 12 anschliesst.

In dem Grundhalter 1 ist, ebenfalls zentrisch in seiner Anlagefläche 3 mit den Profilen 5, eine Aufnahmebohrung 13 vorgesehen, die gegenüber dem Zuganker 9 ein relativ grosses Spiel hat.

Bei diesem Ausführungsbeispiel wird die Aufnahmebohrung 13 von dem freien Innenraum eines Spannrohres 14 gebildet, das seinerseits in einer Bohrung 15 des Grundhalters 1 angeordnet ist und mit dem Zuganker 9 des Wechselhalters 2 eine gemeinsame Spannachse bildet. In dem Spannrohr 14 sind im vorderen Kopfbereich benachbart der Anlagefläche 3 mehrere, beispielsweise zwei einander gegenüberliegende Ausnehmungen 16 eingebracht, die als Spannschlitze bezeichnet werden können. Ferner sind in der zylindrischen Bohrung 15 des Grundhalters 1 in entsprechendem Bereich mehrere, vorzugsweise ebenfalls zwei, unter einem Winkel zur Spannachse liegende, einander gegenüberliegend angeordnete taschenförmige Ausnehmungen 17 eingebracht, die als Spanntaschen bezeichnet werden können. Die Spannschlitze 16 im Spannrohr 14 und die Spanntaschen 17 im Grundhalter 1 sind so ausgebildet, dass sie zylindrische Spannrollen 18 aufnehmen können. Die Spannrollen 18 können durch zylindrische Bohrungen 19, die über dem Ende der betroffenen Spanntasche im Grundhalter 1 liegen, und durch Gewindestifte 20 wieder verschlossen werden können, in die Spanntaschen und Spannschlitze eingebracht werden. Bei einer translatorischen Bewegung des Spannrohres 14 bewegen sich die Spannrollen 18 in den Spanntaschen 17 je nach Bewegungsrichtung zum Zentrum des Spannrohres 14 und damit zur Spannachse hin, oder vom Zentrum des Spannrohres 14 und damit von der Spannachse fort.

Bei dieser Ausgestaltung geschieht das Spannen und Entspannen bei einem Wechselvorgang wie folgt:

Zum Spannen wird der Wechselhalter 2 mit dem Zuganker 9 in die Aufnahmebohrung 13 des in vorderer Lage befindlichen Spannrohres 14 des Grundhalters 1 eingeführt, bis die Anlageflächen 3, 4 annähernd oder weitgehend zur Anlage kommen. Durch Ziehen des Spannrohres 14 im Grundhalter 1 in Spannrichtung werden die Spannrollen 18 zum Zentrum des Spannrohres 14 hin bewegt und es kommt zwischen den Spannrollen 18, den Spanntaschen 17, den Spannschlitzen 16 des Spannrohres 14 und den Spannflächen 11 des Zugankers 9 zu jeweils drei linienförmigen Berührungszonen, die eine für alle auftretenden Belastungsfälle hochbelastbare formschlüssige Verbindung der Teile des Spannmechanismusses bewirken. Die exakte Zentrierung und Positionierung von Wechselhalter 2 und Grundhalter 1 zueinander geschieht dabei während des Spannens durch die selbstzentrierende Wirkung der Profile 5 der Anlageflächen 3 und 4.

Das Entspannen geschieht durch Verschieben des Spannrohres 14 im Grundhalter 1 entgegen der Spannrichtung. Dabei werden die Spannrollen 18 nach aussen vom Zentrum des Spannrohres 14 fortbewegt, wodurch sich wieder ein freier Durchgang für den Zuganker 9 des Wechselhalters 2 ergibt. Der Wechselhalter 2 kann vom Grundhalter 1 problemlos abgenommen werden.

Die Schub- und Zugbewegung des Spannrohres 14 im Grundhalter 1 können problemlos automatisch gesteuert werden.

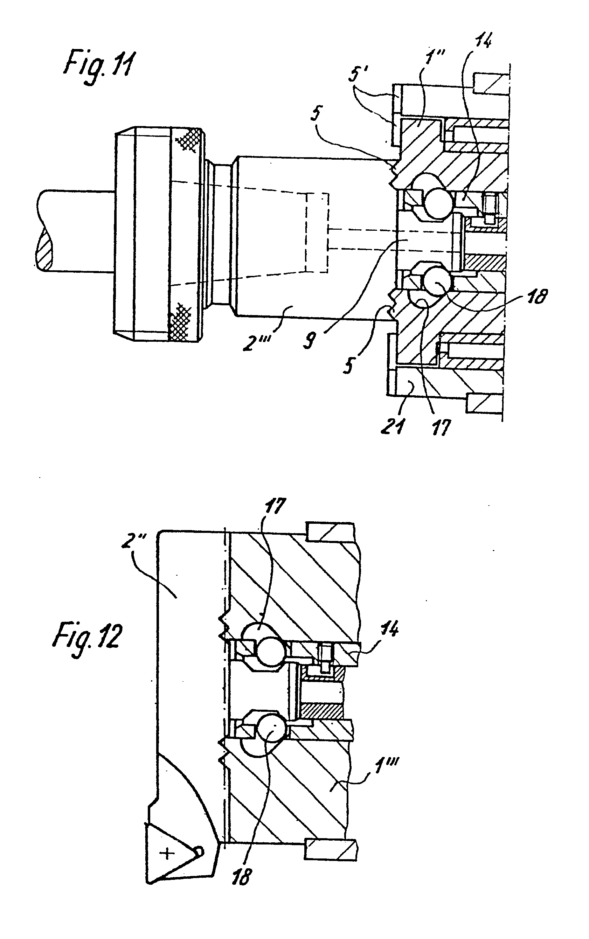

Die grundsätzliche Ausgestaltung dieses Spannmechanismusses, in Verbindung mit der Ausgestaltung der Anlageflächen 3, 4 des Wechselhalters und des Grundhalters mit den entsprechenden kreuzweisen Profilen 5 ermöglicht ferner das Einwechseln sowohl stationärer wie auch rotierender Wechselhalter, und zwar bei entsprechender Ausgestaltung des Grundhalters sogar auf ein und demselben Grundhalter. Dies ist in den Figuren 10 und 11 illustriert. Es ist dort ein Grundhalter 1'' gezeigt, der in einem ortsfest gehaltenen Hüllrohr 21 über Drehlager 22 drehbar gelagert ist und der im übrigen wieder eine Anlagefläche hat, die mit entsprechenden kreuzweisen Profilen 5 versehen ist. Der Grundhalter 1'' hat im übrigen wieder den im Zusammenhang mit den Figuren 5, 6 und 7 geschilderten Spannmechanismus. Der Wechselhalter 2'' hat an seiner Anlagefläche wieder die entsprechenden kreuzweisen Profile 5 und hat den Zuganker 9. Er hat ferner in seinen Aussenbereichen, dort, wo er an dem Hüllrohr 21 anliegt, Formschlusselemente, die auch wiederum Profilabschnitte vergleichbar den Profilabschnitten 5' des Ausführungsbeispieles nach Figur 4 sein können, während an der Stirnfläche des Hüllrohres 21 entsprechende Profilabschnitte 5' vorgesehen sind, wie beispielsweise in Figur 11 illustriert. Bei ortsfestem Hüllrohr 21 ergibt sich eine Anordnung mit drehbarem Grundhalter 1'' und stehendem Wechselhalter 2''. Legt man die gleiche Ausgestaltung des Grundhalters 1'' zugrunde, wie im Ausführungsbeispiel nach Figur 11 illustriert, zeigt es sich, dass hier anstelle des Wechselhalters 2'' ein anderer Wechselhalter 2''' sich aufsetzen und verspannen lässt, der insoweit dann wieder in seinem Anschlussbereich lediglich den Zuganker 9 sowie die Grund-Anlagefläche 4 mit den entsprechenden Profilen 5 hat. Beim Ausführungsbeispiel nach Figur 11 rotieren Grundhalter und Wechselhalter.

Beim Ausführungsbeispiel nach Figur 12 ist ein Grundhalter 1''' vorgesehen, der wiederum einen entsprechenden Spannmechanismus mit Spannrohr 14 und Spannrollen 18 hat. Der Grundhalter 1''' ist ortsfest gehalten. Er kann in seinem gesamten Anschlussflächenbereich einschliesslich Erweiterungsflächen über die Grund-Anlagefläche hinaus vergleichbar der Ausführungsform nach Figur 4 gestaltet sein. Es kann auf ihn beispielsweise ein Wechselhalter entsprechend dem Wechselhalter 2'' nach Figur 10, aber ohne weiteres auch ein Wechselhalter 2''' entsprechend Figur 11 aufgesetzt werden. In beiden Fällen ergibt sich ein System aus feststehendem Grundhalter und feststehendem Wechselhalter.

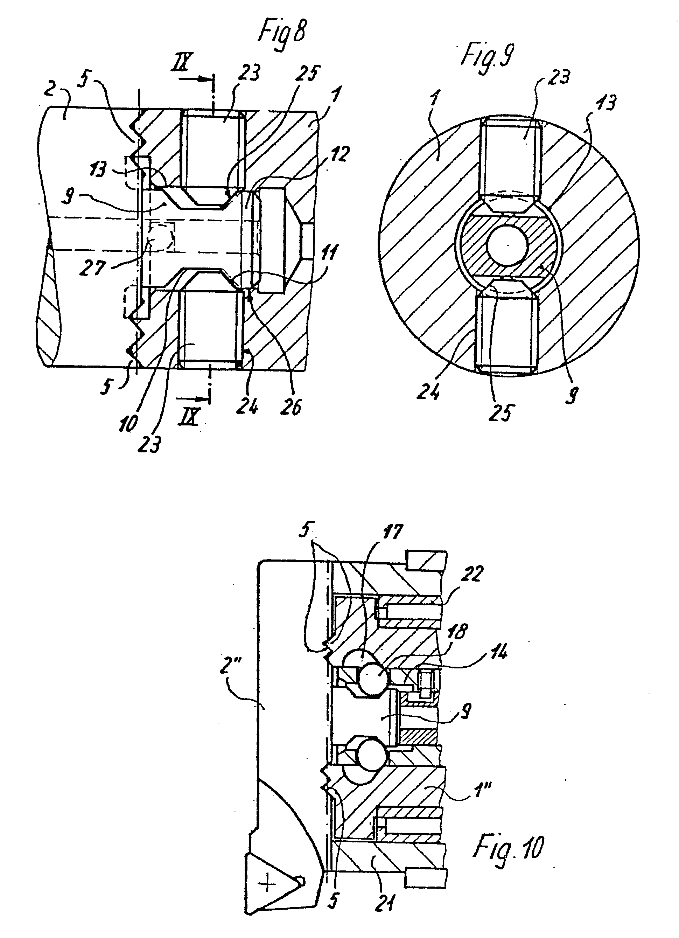

Bei dem Ausführungsbeispiel nach den Figuren 8 und 9 ist eine Halteanordnung gezeigt, deren Spannmechanismus auf das Wechseln von Hand ausgelegt ist. An dem Wechselhalter 2 ist, zentrisch und über die Profile 5 seiner Anlagefläche 4 vorstehend, wiederum der Zuganker 9 befestigt. In dem Grundhalter 1 befindet sich wiederum die mit relativ grossem Spiel zum Zuganker 9 versehene Aufnahmebohrung 13, die sich bei diesem Ausführungsbeispiel unmittelbar im Material des Grundhalters 1 befindet. Von der Seite her sind mehrere beispielsweise zwei einander gegenüberliegende Gewindestifte 23 durch entsprechende Gewindebohrungen 24 im Grundhalter 1 bis in die Aufnahmebohrung 13 einschraubbar. Die Gewindestifte 23 haben an ihren vorderen Enden in Referenz zu den Spannflächen 11 des Zugankers 9 liegende Schrägflächen 25, so dass durch entsprechendes Einschrauben der Gewindestifte 13 bzw. deren Ausschrauben das Lösen und Spannen erfolgen kann. Um ein Abdrängen der Spannachse des Zugankers 9 aus der Spannachse des Grundhalters 1 zu vermeiden, ist zweckmässig der Kopf 12 des Zugankers 9 zumindest abschnittweise zylindrisch ausgebildet und im hinteren Teil der Aufnahmebohrung 13 ist eine damit zusammenwirkende Passung 26 eingearbeitet.

Um ein unbeabsichtigtes, um 180° zur Schneidlage versetztes Verspannen von Wechselhalter und Grundhalter zu vermeiden, ist auf dem Zuganker 9 des Wechselhalters 2 (Figuren 5 und 8) ein Sperrstift 27 vorgesehen, während in dem Grundhalter 1 eine entsprechende, den Sperrstift aufnehmende Nut 28 vorgesehen ist, so dass in Art einer Codierung nur eine eindeutig vorbestimmte Spannlage vorgegeben ist. Bei einem bewussten Versetzen des Sperrstiftes 27 auf dem Zuganker 9 um 180° wäre dieser auch entsprechend verdreht in Überkopflage mit dem Grundhalter 1 verspannbar.

Bei den vorstehend geschilderten Ausführungsbeispielen ist davon ausgegangen worden, dass ein einstückiger Grundhalter vorgesehen ist. Der Grundhalter selbst kann jedoch auch mehrteilig aufgebaut sein, wobei insbesondere ein speziell auf die Zusammenarbeit mit den verschiedenen Wechselhaltern ausgelegter Elementensatz in Art von Adapterstücken vorgesehen sein kann.

Bei den vorstehend beschriebenen Ausführungsbeispielen ist immer von einem Werkzeughalter ausgegangen worden. Es versteht sich, dass der Halter in seiner Gesamtheit genausogut und mit den gleichen Vorteilen auch als Werkstückhalter ausgebildet sein kann, insbesondere dann die Wechselhalter also zur Aufnahme und Festsetzung von Werkstücken ausgebildet sind.

Die Profile können abweichend von der Prismenform auch andere Querschnittsformen, z.B. halbkreisförmige oder andere gerundete Formen haben, soweit sie flankentragend sind.

Abweichend von der beschriebenen Ausführungsformen können die Wechselhalter auch zwei oder mehr Zuganker haben. In dem Grundhalter sind dann Aufnahmebohrungen in entsprechender Anzahl vorhanden.

Ferner genügt für bestimmte Anwendungsfälle nur ein Profil je Seite auf den Anlageflächen.

**Patentansprüche**

1. Werkstück- oder Werkzeughalteranordnung für die spanabhebende Bearbeitung, bestehend aus einem Grundhalter sowie einem Wechselhalter, die jeweils profilierte Anlageflächen haben, mit denen sie mittels eines zugeordneten Spannmechanismusses formschlüssig und selbstzentrierend miteinander verbunden sind, dadurch gekennzeichnet, dass die Anlageflächen (3 und 4) jeweils kreuzweise zueinander liegende, flankentragende Profile (5, 6) aufweisen, die um einen unprofilierten Mittelbereich herum an vier jeweils winkelig zueinander liegenden Seiten, auf einander gegenüberliegenden Seiten parallel zueinander angeordnet sind.

2. Werkstück- oder Werkzeughalteranordnung nach Anspruch 1, dadurch gekennzeichnet, dass die Profile (5, 6) in einem Winkel von 90° zueinander angeordnet sind.

3. Werkstück- oder Werkzeughalteranordnung nach Anspruch 1 oder 2, dadurch gekennzeichnet, dass die Profile (5, 6) als Prismen mit einem spitzen Winkel gleich oder kleiner 90° ausgebildet sind.

4. Werkstück- oder Werkzeughalteranordnung nach Anspruch 1, dadurch gekennzeichnet, dass auf jeder Seite nur ein Profil (5, 6) vorgesehen ist.

5. Werkstück- oder Werkzeughalteranordnung nach Anspruch 1, dadurch gekennzeichnet, dass die Anlageflächen (3, 4) von Erweiterungsflächen (7, 8) umgeben sind, an denen an vorgegebenen Stellen weitere, zu den Profilen (5, 6) der Anlageflächen (3, 4) fluchtend liegende Profile (5') vorgesehen sind.

6. Werkstück- oder Werkzeughalteranordnung nach Anspruch 1, dadurch gekennzeichnet, dass an dem Wechselhalter (2, 2', 2'', 2''') über die Anlagefläche (4) vorspringend mindestens ein Zuganker (9) mit einer im Sinne der Ineinanderziehung der Profile (5) der Anlageflächen (3, 4) orientierten, schrägen Spannfläche (11) vorgesehen ist und in dem Grundhalter (1, 1', 1'', 1''') an seinem dem Wechselhalter zugewandten Ende mindestens eine gegenüber dem Zuganker (9) Spiel aufweisende Bohrung (13) für dessen Aufnahme vorgesehen ist und in die Bohrung (13) eingreifende und auf die Spannfläche (11) wirkende Spannmittel in dem Grundhalter (1, 1', 1'', 1''') angeordnet sind.

7. Werkstück- oder Werkzeughalteranordnung nach Anspruch 6, dadurch gekennzeichnet, dass der Zuganker (9) und seine Aufnahmebohrung (13) jeweils zentrisch zu den Profilen (5) der Anlageflächen (3, 4) angeordnet ist.

8. Werkstück- oder Werkzeughalteranordnung nach Anspruch 6, dadurch gekennzeichnet, dass die Aufnahmebohrung (13) für den Zuganker (9) von dem Innenraum eines verschieblich in dem Grundhalter (1) geführten Spannrohres (14) gebildet ist, in dem mindestens zwei einander gegenüberliegende Spannschlitze (16) eingearbeitet sind, während in dem angrenzenden Wandungsbereich der Aufnahmebohrung des Grundhalters (1) Spanntaschen (17) eingearbeitet sind, wobei die Spannschlitze (16) und die Spanntaschen (17) zur Aufnahme zylindrischer Spannrollen (18) ausgebildet sind.

9. Werkstück- oder Werkzeughalteranordnung nach Anspruch 8, dadurch gekennzeichnet, dass über den Enden der Spanntaschen (17) im Grundhalter (1) durch Gewindestifte (20) verschliessbare zylindrische Bohrungen (19) vorgesehen sind, durch die die zylindrische Spannrollen (18) in die Spanntaschen (17) und die Spannschlitze (16) einbringbar sind.

10. Werkstück- oder Werkzeughalteranordnung nach Anspruch 6, dadurch gekennzeichnet, dass in die Aufnahmebohrung (13) des Grundhalters (1) von der Seite her durch die Gewindebohrungen (14) mindestens zwei einander gegenüberliegende Gewindestifte (23) einschraubbar sind, die an ihren Einschraubenden mit den Spannflächen (11) des Zugankers (9) des Wechselhalters (2) zusammenwirkende Spannflächen (25) aufweisen.

11. Werkstück- oder Werkzeughalteranordnung nach Anspruch 10, dadurch gekennzeichnet, dass am freien Kopf (12) des Zugankers (9) des Wechselhalters (2) ein zylindrischer Abschnitt vorgesehen ist und in der Aufnahmebohrung (13) des Grundhalters (1), in Einsteckrichtung hinter den Gewindestiften (23) liegend, eine Passung (26) für den zylindrischen Abschnitt des Kopfes (12) des Zugankers (9) gebildet ist.

12. Werkstück- oder Werkzeughalteranordnung nach Anspruch 6, dadurch gekennzeichnet, dass an dem Zuganker (9) des Wechselhalters (2) ein Sperrstift (27) befestigt ist, für den im Grundhalter (1) eine ihn aufnehmende Nut (28) vorgesehen ist.

13. Werkstück- oder Werkzeughalteranordnung nach Anspruch 5, dadurch gekennzeichnet, dass der Grundhalter (1'') drehbar in einem ortsfesten Hüllrohr (21) gelagert ist und der Wechselhalter (2'') mittels der an seinen Erweiterungsfläche (8) zu seiner Anlagefläche (4) vorgesehenen Profilabschnitten (5') an entsprechenden Profilanschnitten an der Stirnfläche des Hüllrohres (21) gegenüber dem drehbaren Grundhalter (1'') festsetzbar ist.

## Claims

1. A workpiece or tool holder arrangement for cutting machining comprising a main holder and an interchangeable holder which each have profiled contact surfaces with which they are positively and self-centeringly connected together by means of an associated clamping mechanism characterised in that the contact surfaces (3 and 4) have respective flank-bearing profiles (5, 6) which lie in crossed relationship with each other and which are arranged in mutually parallel relationship around an unprofiled central region at four sides which are respectively disposed at an angle relative to each other, on mutually oppositely disposed sides.

2. A workpiece or tool holder arrangement according to claim 1 characterised in that the profiles (5, 6) are arranged at an angle of 90° relative to each other.

3. A workpiece or tool holder arrangement according to claim 1 or 2 characterised in that the profiles (5, 6) are in the form of prisms with an acute angle of equal to or less than 90°.

4. A workpiece or tool holder arrangement according to claim 1 characterised in that only one profile (5, 6) is provided on each side.

5. A workpiece or tool holder arrangement according to claim 1 characterised in that the contact surfaces (3, 4) are surrounded by enlargement surfaces (7, 8) on which there are provided, at predetermined locations, further profiles (5') which are disposed in alignment with the profiles (5, 6) of the contact surfaces (3, 4).

6. A workpiece or tool holder arrangement according to claim 1 characterised in that provided on the interchangeable holder (2, 2', 2'', 2''') and projecting beyond the contact surface (4) is at least one tie anchor (9) with an inclined clamping surface (11) which is oriented in the direction of pulling the profiles (5) of the contact surfaces (3, 4) into each other and provided in the main holder (1, 1', 1'', 1''') at its end which is towards the interchangeable holder is at least one bore (13) which has clearance relative to the tie anchor (9), for accommodating same, and arranged in the main holder (1, 1', 1'', 1''') are clamping means which engage into the bore (13) and which act on the clamping surface (11).

7. A workpiece or tool holder arrangement according to claim 6 characterised in that the tie anchor (9) and its receiving bore (13) are each arranged concentrically with respect to the profiles (5) of the contact surfaces (3, 4).

8. A workpiece or tool holder arrangement according to claim 6 characterised in that the receiving bore (13) for the tie anchor (9) is formed by the internal cavity of a clamping tube (14) which is guided displaceably in the main holder (1) and in which at least two mutually oppositely disposed clamping slots (16) are provided while clamping pockets (17) are provided in the adjoining wall region of the receiving bore in the main holder (1), the clamping slots (16) and the clamping pockets (17) being arranged to receive cylindrical clamping rollers (18).

9. A workpiece or tool holder arrangement according to claim 8 characterised in that provided over the ends of the clamping pockets (17) in the main holder (1) are cylindrical bores (19) which are closable by screwthreaded pins (20) and through which the cylindrical clamping rollers (18) can be introduced into the clamping pockets (17) and the clamping slots (16).

10. A workpiece or tool holder arrangement according to claim 6 characterised in that at least two mutually oppositely disposed screwthreaded pins (23) can be screwed into the receiving bore (13) of the main holder (1) from the side through the screwthreaded bores (14), the screwthreaded pins (23) at their screw-in ends having clamping surfaces (25) co-operating with the clamping surfaces (11) of the tie anchor (9) of the interchangeable holder (2).

11. A workpiece or tool holder arrangement according to claim 10 characterised in that a cylindrical portion is provided on the free head (12) of the tie anchor (9) of the interchangeable holder (2) and formed in the receiving bore (13) in the main holder (1), disposed downstream of the screwthreaded pins (23) in the direction of insertion, is a fitting portion (26) for the cylindrical portion of the head (12) of the tie anchor (9).

12. A workpiece or tool holder arrangement according to claim 6 characterised in that secured to the tie anchor (9) of the interchangeable holder (2) is a locking pin (27) for which a groove (28) for accommodating same is provided in the main holder (1).

13. A workpiece or tool holder arrangement according to claim 5 characterised in that the main holder (1'') is mounted rotatably in a stationary casing tube (21) and the interchangeable holder (2'') can be fixed relative to the rotatable main holder (1'') by means of the profile portions (5') provided on the interchangeable holder enlargement surfaces (8) associated with its contact surface (4), at corresponding profile portions at the end face of the casing tube (21).

## Revendications

1. Dispositif porteur de pièce travaillée ou d'outil pour l'usinage par enlèvement de matière, constitué d'un élément porteur de base et d'un élément porteur interchangeable qui présentent chacun des faces d'appui profilées par lesquelles ils sont mutuellement assemblés par complémentarité de forme et avec autocentrage au moyen d'un mécanisme de serrage associé, caractérisé en ce que les faces d'appui (3 et 4) présentent chacune des profils (5, 6) se trouvant en croix les uns par rapport aux autres et porteurs de flancs, profils qui sont disposés tout autour d'une région médiane non profilée sur quatre côtés se trouvant à chaque fois en angle les uns par rapport aux autres, les profils étant situés parallèlement entre eux sur des côtés mutuellement en vis-à-vis.

2. Dispositif porteur de pièce travaillée ou d'outil selon la revendication 1, caractérisé en ce que les profils (5, 6) sont disposés à un angle mutuel de 90°.

3. Dispositif porteur de pièce travaillée ou d'outil selon la revendication 1 ou 2, caractérisé en ce que les profils (5, 6) sont réalisés sous la forme de prismes présentant un angle au sommet inférieur ou égal à 90°.

4. Dispositif porteur de pièce travaillée ou d'outil selon la revendication 1, caractérisé en ce qu'il n'est prévu qu'un seul profilé (5, 6) sur chaque côté.

5. Dispositif porteur de pièce travaillée ou d'outil selon la revendication 1, caractérisé en ce que les faces d'appui (3, 4) sont entourées de faces d'extension (7, 8) sur lesquelles sont prévus, en des endroits prédéterminés, d'autres profils (5') situés en alignement avec les profils (5, 6) des faces d'appui (3, 4).

6. Dispositif porteur de pièce travaillée ou d'outil selon la revendication 1, caractérisé en ce qu'il est prévu sur l'élément porteur interchangeable (2, 2', 2'', 2'''), en saillie au-dessus de la face d'appui (4), au moins un tirant d'ancrage (9) présentant une face de serrage oblique (11) orientée en vue de l'engagement mutuel des profils (5) des faces d'appui (3, 4), en ce qu'il est prévu dans l'élément porteur de base (1, 1', 1'', 1'''), à son extrémité tournée vers l'élément porteur interchangeable, au moins un alésage (13) présentant du jeu vis-à-vis du tirant d'ancrage (9) et destiné à recevoir ce dernier, et en ce que des moyens de serrage, s'engageant dans l'alésage (13) et agissant sur la face de serrage (11), sont disposés dans l'élément porteur de base (1, 1', 1'', 1''').

7. Dispositif porteur de pièce travaillée ou d'outil selon la revendication 6, caractérisé en ce que le tirant d'ancrage (9) et l'alésage (13) le recevant sont chacun disposés en position centrale par rapport aux profils (5) des faces d'appui (3, 4).

8. Dispositif porteur de pièce travaillée ou d'outil selon la revendication 6, caractérisé en ce que l'alésage (13) recevant le tirant d'ancrage (9) est formé par l'espace intérieur d'un tube de serrage (14) qui est guidé en coulissement dans l'élément porteur de base (1) et dans lequel sont usinées au moins deux fentes de serrage (16) mutuellement en vis-à-vis, tandis que des poches de serrage (17) sont usinées dans la région contiguë de la paroi de l'alésage récepteur de l'élément porteur de base (1), les fentes de serrage (16) et les poches de serrage (17) étant configurées pour recevoir des rouleaux de serrage cylindriques (18).

9. Dispositif porteur de pièce travaillée ou d'outil selon la revendication 8, caractérisé en ce qu'il est prévu dans l'élément porteur de base (1), au-dessus des extrémités des poches de serrage (17), des alésages cylindriques (19) obturables par des goujons filetés (20), alésages à travers lesquels les rouleaux de serrage cylindriques (18) peuvent être introduits dans les poches de serrage (17) et les fentes de serrage (16).

10. Dispositif porteur de pièce travaillée ou d'outil selon la revendication 6, caractérisé en ce qu'au moins deux goujons filetés (23) mutuellement en vis-à-vis peuvent être vissés, par le côté et à travers des alésages filetés (24), dans l'élément porteur de base (1), goujons qui présentent à leurs extrémités de vissage des faces de serrage (25) coopérant avec les faces de serrage (11) du tirant d'ancrage (9) de l'élément porteur interchangeable (2).

11. Dispositif porteur de pièce travaillée ou d'outil selon la revendication 10, caractérisé en ce qu'il est prévu sur la tête libre (12) du tirant d'ancrage (9) de l'élément porteur interchangeable (2) une portion cylindrique, et en ce qu'est formée dans l'alésage récepteur (13) de l'élément porteur de base (1), située derrière les goujons filetés (23) dans le sens d'emmanchement, une adaptation (26) pour la portion cylindrique de la tête (12) du tirant d'ancrage (9).

12. Dispositif porteur de pièce travaillée ou d'outil selon la revendication 6, caractérisé en ce qu'un axe de blocage (27) est fixé sur le tirant d'ancrage (9) de l'élément porteur interchangeable (2), axe pour lequel est prévue dans l'élément porteur de base (1) une rainure (28) le recevant.

13. Dispositif porteur de pièce travaillée ou d'outil selon la revendication 5, caractérisé en ce que l'élément porteur de base (1'') est monté rotatif dans un tube de gainage (21) fixe, et en ce que l'élément porteur interchangeable (2'') peut, au moyen des parties profilées (5'') prévues sur les faces d'extension (8) de sa face d'appui (4), être immobilisé par rapport à l'élément porteur de base rotatif (1''), sur des parties profilées correspondantes prévues sur la face frontale du tube de gainage (21).

*Fig. 1*

*Fig. 2*

0 175 902

Fig. 3

Fig. 4

Fig.5

Fig.6

Fig.7

Fig 8

Fig. 9

Fig. 10

Fig. 11

Fig. 12